(19) Europäisches Patentamt
European Patent Office
Office européen des brevets

(11) **EP 2 123 178 B1**

(12) **EUROPEAN PATENT SPECIFICATION**

(45) Date of publication and mention
of the grant of the patent:
**12.11.2014 Bulletin 2014/46**

(51) Int Cl.:
*A23L 1/36* (2006.01)     *A23K 1/00* (2006.01)
*C05F 5/00* (2006.01)     *C09K 17/32* (2006.01)
*A23L 1/305* (2006.01)     *A23K 1/14* (2006.01)
*A23L 1/211* (2006.01)

(21) Application number: **07791282.2**

(22) Date of filing: **25.07.2007**

(86) International application number:
**PCT/JP2007/064566**

(87) International publication number:
**WO 2008/090639 (31.07.2008 Gazette 2008/31)**

(54) **METHOD FOR PRODUCTION OF RAPESEED MEAL**

VERFAHREN FÜR DIE HERSTELLUNG VON RAPSSCHROT

PROCÉDÉ DE PRODUCTION D'UN TOURTEAU DE COLZA

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **24.01.2007 JP 2007013358**

(43) Date of publication of application:
**25.11.2009 Bulletin 2009/48**

(73) Proprietor: **J-Oil Mills, Inc.**
**Tokyo 104-0044 (JP)**

(72) Inventors:
• **SAITO, Sanshiro**
**Chuo-ku**
**Tokyo 104-0044 (JP)**
• **SATO, Toshiro**
**Chuo-ku**
**Tokyo 104-0044 (JP)**
• **FUJIWARA, Shigeru**
**Chuo-ku**
**Tokyo 104-0044 (JP)**
• **HORI, Hajime**
**Chuo-ku**
**Tokyo 104-0044 (JP)**
• **TSUNEHARA, Nobuhiko**
**Chuo-ku**
**Tokyo 104-0044 (JP)**
• **SASAKURA, Masato**
**Chuo-ku**
**Tokyo 104-0044 (JP)**

• **YAMASHITA, Masaru**
**Chuo-ku**
**Tokyo 104-0044 (JP)**
• **MAEDA, Daisuke**
**Chuo-ku**
**Tokyo 104-0044 (JP)**
• **NAKAGAWA, Makiko**
**Chuo-ku**
**Tokyo 104-0044 (JP)**
• **MOMIYAMA, Kaoru**
**Chuo-ku**
**Tokyo 104-0044 (JP)**
• **YOSHIDA, Takeshi**
**Chuo-ku**
**Tokyo 104-0044 (JP)**

(74) Representative: **Hellmich, Wolfgang**
**European Patent and Trademark Attorney**
**Lortzingstrasse 9 / 2. Stock**
**81241 München (DE)**

(56) References cited:
EP-A1- 1 908 355      WO-A2-02/080699
JP-A- 10 229 828      JP-A- S52 109 508
JP-A- 2005 513 075

EP 2 123 178 B1

- Shaaban Ali Kubuni Mwachireya: "Effect of processing and microbial enzyme treatment on the nutritive value of canola meal for rainbow trout" Thesis 31 December 1995 (1995-12-31), XP002581884 The University of British Columbia Retrieved from the Internet: URL:https://circle.ubc.ca/bitstream/handle /2429/4206/ubc_1996-0073.pdf?sequence=1> [retrieved on 2010-05-11]
- Elaheh Keshavarz: "Preparation, decolorization and functional properties of the protein isolates extracted from rapeseed meal" 31 May 1974 (1974-05-31), XP002581885 Retrieved from the Internet: URL:https://circle.ubc.ca/bitstream/handle /2429/18792/UBC_1974_A6_7%20K48.pdf?sequen ce=1> [retrieved on 2010-05-11]
- A.F. Mustafa, D.A. Christensen, J. J. McKinnon: "The effects of feeding high fiber canola meal on total tract digestibility and milk production" Internet 19 November 1996 (1996-11-19), pages 133-140, XP002581886 Retrieved from the Internet: URL:http://article.pubs.nrc-cnrc.gc.ca/ppv /RPViewDoc?issn=1918-1825&volume=77&issue= 1&startPage=133> [retrieved on 2010-05-11]
- KAMINSKA B Z ET AL: "High-protein fraction of 00 type rapeseed meal in broiler nutrition" JOURNAL OF ANIMAL AND FEED SCIENCES, POLSKA AKADEMIA NAUK, PL, vol. 9, no. 1, 1 January 2000 (2000-01-01) , pages 123-136, XP009133407 ISSN: 1230-1388
- Nizakat Bibi, Abdus Sattar and M. A. Chaudry: "Phenolic constituents in major fractions of tropical rapeseed" Die Nahrung vol. 35, no. 10, 19 October 2006 (2006-10-19), pages 1053-1059, XP002582036 Online Retrieved from the Internet: URL:http://www3.interscience.wiley.com/jou rnal/113410026/abstract?CRETRY=1&SRETRY=0> [retrieved on 2010-05-12]

## Description

The present invention relates to a method for producing a rapeseed meal, and more particularly to a method for producing a rapeseed meal having high industrial usefulness.

Rapeseed meal that remains after oil is removed from rapeseeds is currently being used for feed and fertilizers. However, compared to soybean meal, the rapeseed meal is inferior for its low protein content, low nutritional value, poor palatability to animals, poor coloring, and the like. The reasons are high in fiber and bitter substances, and relatively low in protein content of rapeseed meal.

Nitrogen and minerals contained in the rapeseed meal are valuable sources of nutrient in feed and fertilizers. Their contents are affected by the composition of the rapeseeds themselves, and vary depending on the harvesting period and the variety. The rapeseed meal from low nutritious rapeseeds increases a risk of falling below product specifications. On the other hand, when the rapeseeds are nutritious, the nutrients may exceed the effective amount for use as feed and fertilizers, thereby causing increase in discharge of environmentally harmful materials.

To control the amount of nutrients in the rapeseed meal, a method is known in which moisture content is adjusted by heat amount. However, because the rapeseed meal does not have high moisture content, the adjustment range is narrow and heat treatment is not the ultimate solution.

As a measure for adjusting protein content in rapeseed meal, nutritional value of the rapeseed meal obtained after the rapeseeds are dehulled and the oil is extracted is recognized in Ileal *apparent protein and amino acid digestibilities and endogenous nitrogen losses in pigs fed soybean and rapeseed products* (W. Grala, et al., Journal of Animal Science, 1998, 76, 557 to 568) and Nitrogen utilization in pigs fed diets with soybean and rapeseed products leading to different ileal endogenous nitrogen losses (W. Grala, et al., Journal of Animal Science, 1998, 76, 569 to 577).

In Japanese Patent Application Laid-open No. 2000-316472 (Method for separating rapeseed germ and rapeseed germ oil), a method is described for mechanically crushing rapeseed germ and obtaining only the rapeseed germ by a wind force classifier or sieve. In International Publication WO 2000/027222 (Method for classifying specific tissue for oil seeds or cereals and finely milled powders), a method is described for classifying specific constitution from oil seeds, such as rapeseeds.

Shaaban Ali Kubuni Mwachireya: "Effect of processing and microbial enzyme treatment on the nutritive value of canola meal for rainbow trout", Thesis, 31 December 1995 (1995-12-31), pages 1-143, XP002581884, The University of British Columbia, describes on page 55, lines 20 to 24 that the fibre content of commercial canola meal was reduced by milling in a hammer mill equipped with a 0.5 mm screen, and then the screen unders were sieved manually through a 0.425 mm sieve to reduce the fibre content.

Elaheh Keshavarz: "Preparation, delorization and functional properties of the protein isolates extracted from rapeseed meal", 31 May 1974 (1974-05-31), pages 1-30, XP002581885, describes that the rapeseed meal was sieved through a 60 mesh sieve to remove the seed coat. The 60 mesh sieve does not meet this invention. Furthermore, D2 describes only that the 60 mesh sieve is used to remove the seed coat.

A. F. Mustafa, D. A. Christensen, J. J. McKinnon: "The effects of feeding high fiber canola meal on total tract digestibility and milk production", Internet, 19 November 1996 (1996-11-19), pages 133-140, XP002581886, describes in Feed Preparation on page 134 that samples of canola meal were tempered to 16% moisture and milled using an 8-inch disc mill, and then the milled meals were sieved using a 35-mesh screen to obtain a high fiber low protein (HFCM) and a low fiber high protein fraction.

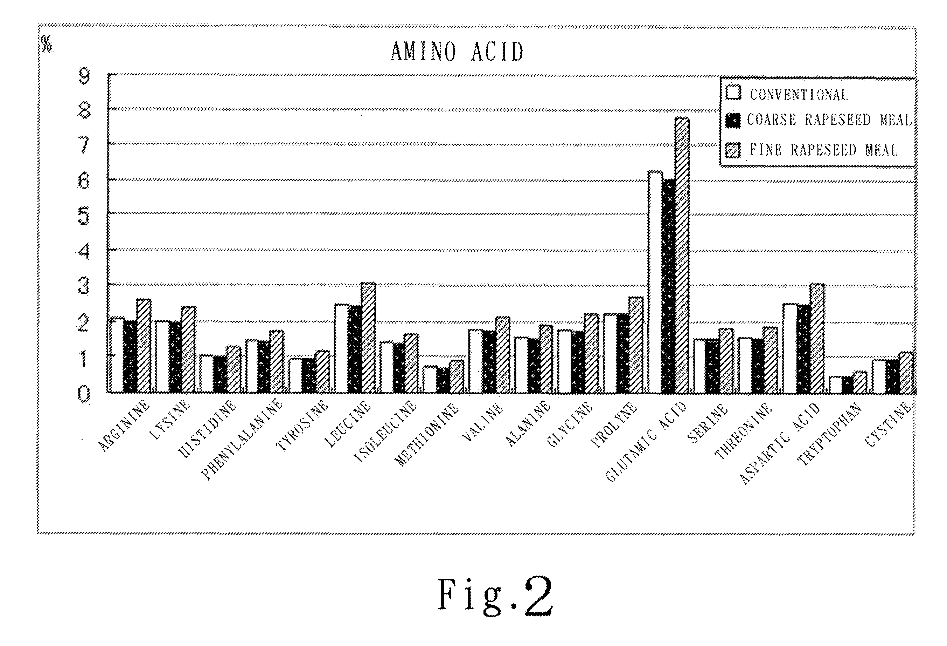

KAMINSKA B Z ET AL: "High-protein fraction of 00 type rapessd meal in broiler nutrition" JOURNAL OF ANIMAL AND FEED SCIENCES, POLSKA AKADEMIA NAUK, PL, vol. 9, no. 1,1 January 2000 (2000-01-01), pages 123-136, XP009133407, describes in MATERIAL AND METHOD that commercial double-low, brown-seeded rapeseed meal (RSM) was mechanically segregated by passing through a 0.5 mm (32M) sieve. The fraction named HP-RSM had less crude fibre and higher protein level. HP fraction contained less methionine than R-RSM (refer to Table 3). However, the fine rapeseed meal under 35M sieve in this invention is increased in methionine level. In more detail, the percentages of methionine etc. useful for muscle development, further increased by about 2% to 4% from the simple increase in N-content (refer to Figure 2).

However, a method for extracting the oil after the rapeseeds having small grain sizes are dehulled, as described in Grala et. al., Journal of Animal Science, 1998, 76, 557 to 568 and 569 to 577 is likely expensive and industrially unsuitable.

When the rapeseed meal is used after the rapeseed germ is separated using the method in Grala et al., 1998, 76, 557 to 568, it is required to extract independently a rapeseed germ fraction and other fractions. Therefore, double the equipment, such as extractor and silo for holding raw materials, is required. Operation also becomes cumbersome.

While the method in Grala et al., 1998, 76, 569 to 577 achieves improvement in mouthfeel as foods, water retentivity, suspensibility, and the like, a high protein content rapeseed meal cannot be obtained.

Disclosure of Invention

As described above, the conventional methods are likely not technologies industrially applicable to adjust nutrients in the rapeseed meal. Therefore, an object of the present invention is to provide a method for producing rapeseed meal with adjusted nutritional values including protein, from rapeseed meal in a simple manner and at a low cost. Moreover, the method produces little to no waste.

The invention is as defined by the appended claims.

After keen research into the above-described problems, the present inventors have discovered that the problems can be unexpectedly resolved by the following invention. The present invention provides a method for producing rapeseed meal in which a rapeseed meal is sifted through any of 32 mesh (500 μm openings) to 48 mesh (300 μm openings) sieves, and separated into coarse rapeseed meal having a grain size in which grains remain on the mesh sieve and fine rapeseed meal having a grain size in which grains pass through the mesh sieve. In the present specification, to differentiate between the two types of rapeseed meals obtained above the sieve and below the sieve when the rapeseed meal is sifted through any of the 32 mesh (500 μm openings) to 48 mesh (300 μm openings) sieves, the rapeseed meal having a relatively large granularity remaining on the sieve is referred to as the coarse rapeseed meal. The rapeseed meal having a relatively small granularity falling below the sieve is referred to as the fine rapeseed meal. The present specification adopts Tyler Standard Sieves.

The invention provides a fine rapeseed meal obtained by a rapeseed meal being sifted through any of 32 (500 μm) to 48 mesh (300 μm) sieves. The fine rapeseed meal has a grain size passing through the 32 (500 μm) to 48 mesh (300 μm) sieve and has an increased protein content. Particularly, the fine rapeseed meal has a nitrogen content of 6% or more.

The invention describes a fine rapeseed meal obtained by rapeseed meal being sifted through a 48 to 60 mesh sieve. The fine rapeseed meal has a grain size passing through the 48 to 60 mesh sieve and a nitrogen content from 6.53% to 7.27%.

The invention also provides a rapeseed meal reduced in bitterness wherein fractions below a 32 to 48 mesh are not included. The rapeseed meal is preferably a coarse rapeseed meal obtained by a rapeseed meal being sifted through any of 32 to 48 mesh sieves. The coarse rapeseed meal has a grain size that remains on the 32 to 48 mesh sieve and bitterness is reduced.

The invention also provides a method of adjusting nitrogen content of the rapeseed meal by a rapeseed meal being sifted through any of 32 to 48 mesh sieves.

The invention can produce two types of rapeseed meals having uniform granularities, the fine rapeseed meal and the coarse rapeseed meal, through a simple and inexpensive operation in which a rapeseed meal is sifted after oil is extracted.

The fine rapeseed meal passing through the 32 to 48 mesh sieve has a high protein content. Moreover, the fine rapeseed meal has excellent nutritional value because it includes a higher percentage of specific amino acids highly useful as feed than the conventional rapeseed meal. The amino acids are highly valuable for use in feed. Coloring of the fine rapeseed meal is also improved. Moreover, finer rapeseed meal that passes through the 48 to 60 mesh sieve has a higher protein content in which the nitrogen content is from 6.53% to 7.27%.

On the other hand, the coarse rapeseed meal remaining on the 32 to 48 mesh sieve has improved palatability, particularly reduced bitterness, while maintaining nutritional value. The palatability is considered to be improved as a result of bitter substances being removed and remaining bitter substances being masked by granulation during oil extraction. Such rapeseed meal cannot be obtained by a conventional method in which oil is extracted after the hulls are separated from the cotyledons and hypocotyls. According to the process of the invention, the conventional rapeseed meal having low product value for the bitter substances can be changed to a high-quality product. Moreover, adjustment of excessive nitrogen content reduces environmental load when the rapeseed meal is used as feed and fertilizers. In this way, the industrial usefulness of the two obtained types of rapeseed meals is extremely high, and thus little to no waste is produced. Therefore, the process of the invention is an environmentally friendly method also because no waste is produced.

In the method for adjusting the nitrogen content in the rapeseed meal by the rapeseed meal being sifted through any of the 32 to 48 mesh sieves, changes in the nitrogen content of the rapeseed meal can be arbitrarily adjusted. This is advantageous for increasing the nitrogen content and increasing nutritional value when a rapeseed meal having low nitrogen content and low nutritional value, depending on the harvesting period and the variation, is obtained as the raw material. This is also advantageous for preventing production of environmentally hazardous substances when a rapeseed meal having high nitrogen content and high nutritional value is obtained as the raw material, through adjustment of the nitrogen content in the rapeseed meal to a suitable amount and adjustment of the feed or fertilizer including the rapeseed meal.

BRIEF DESCRIPTION OF DRAWINGS

Fig. 1 Graph indicating color evaluation of a coarse rapeseed meal and a fine rapeseed meal of the present invention, and a conventional rapeseed meal.

Fig. 2 Graph indicating amino acid analyses of the coarse rapeseed meal and the fine rapeseed meal of the present invention, and the conventional rapeseed meal.

Fig. 3 Graph indicating amounts of feed intake when male chicken broilers are fed the coarse rapeseed meal and the fine rapeseed meal of the present invention.

Best mode(s) for carrying out the invention

A method for producing rapeseed meal according to an embodiment of the invention will be described hereafter. Rapeseed meal used as the raw material in the process of the invention refers to residue remaining after oil is extracted from rapeseeds. The variety of the rapeseed is not particularly limited, and any rapeseed can be used. Preferably, the rapeseeds are those having reduced erucic acid and glucosinolate, such as canola seeds.

Oil extraction from the rapeseeds is usually divided into two processes. First, the oil is extracted from the rapeseeds by a press. Next, the oil remaining in the pomace is extracted using an organic solvent, such as n-hexane. The pressed oil and the extracted oil are combined and refined. The rapeseed meal obtained after the two-stage oil extraction process has unique granularity distribution because a portion of the rapeseed meal is granulated during the oil extraction process. As a result of the rapeseed meal being sifted through a sieve, rapeseed meal with characteristics depending on the fraction can be obtained.

The rapeseed meal is sifted through a 32 to 48 mesh sieve, more preferably a 35 to 48 mesh sieve, and further preferably a 35 to 42 mesh sieve. The rapeseed meal is separated into coarse rapeseed meal having a grain size in which the grains remain on the mesh sieve and fine rapeseed meal having a grain size in which the grains pass through the mesh sieve. As a result, properties of the rapeseed meal differ between that on the mesh sieve and that below the mesh sieve. In the invention, as long as the above-described sieves are included, use of a plurality of sieves is not prohibited. The invention also does not prevent the separated coarse rapeseed meal from being further classified, or the separated fine rapeseed meal from being further classified. Therefore, these fractions are also included in the present invention.

Specifically, a fine rapeseed meal having excellent nutritional value in nitrogen content of 6% or more and in protein content of 37.50% or more is sifted below the 32 to 48 mesh sieve. The fine rapeseed meal improves digestibility. The fine rapeseed meal is light in color and is suitable as raw material for feed.

The fine rapeseed meal limited to that below the 48 to 60 mesh sieve has a nitrogen content of 7% or more and a protein content of 43.75% or more when the nitrogen content of the rapeseed meal serving as the raw material is 5.8% or more. The nitrogen content is 6.5% or more and the protein content is 40.625% or more, even when the nitrogen content of the rapeseed meal serving as the raw material is less than 5.8%. On average, the nitrogen content and the protein content are about 1.2 times higher than those of the rapeseed meal serving as the raw material.

The fine rapeseed meal having the above-described characteristics has higher nutritional value regarding protein and the like than conventional rapeseed meal. Therefore, the amount of additives required when the rapeseed meal is used as feed and fertilizers can be reduced. Moreover, breeding efficiency for pigs, cows, fowls, and fishes can be improved.

On the other hand, coarse rapeseed meal is separated and remains on the 32 to 60 mesh sieve. While the nitrogen content and the protein content are not as high as those in the fine rapeseed meal, the coarse rapeseed meal maintains nutritional value without becoming excessive. The protein content in the conventional rapeseed meal varies with the harvesting period and the variation. However, as a result of the mesh of the sieve being adjusted within the range of the invention, the amount by which the nitrogen content and the protein content change to those of the fine rapeseed meal can be adjusted.

The coarse rapeseed meal has a slightly lower content of bitter substances, such as tannic acid, than conventional unsifted rapeseed meal. Moreover, the coarse rapeseed meal is formed into grains with the bitter substances being combined with testae during oil extraction. Therefore, while the bitter substances are included, the bitterness is not as strong as that expected from the content. Within the coarse rapeseed meal, the portion in which the grains are formed by the combination with the testae has a relatively high nutritional value. The presence of this portion serves to maintain the nutritional value of the coarse rapeseed meal. Reduced bitterness and high nutritional value improve palatability to livestock, and lead to growth acceleration in livestock.

The coarse rapeseed meal contains a relatively large amount of testae, and therefore has a high fiber content. This is favorable for use as feed for cows and soil conditioners requiring fiber. Glucosinolate is lower than in the conventional rapeseed meal. Because glucosinolate is toxic to livestock, the process of the invention is advantageous in that low-glucosinolate rapeseed meal can be obtained. The coarse rapeseed meal having the above-described characteristics is mainly effective for improving palatability to fowls, cows, pigs, and fishes, and furthermore generally provides feed and fertilizers having low environmental load.

The invention provides a method for adjusting the nitrogen content in the rapeseed meal by the rapeseed meal being sifted through any of a 32 to 48 mesh sieve, more preferably a 35 to 48 mesh sieve, and further preferably a 35 to 42 mesh sieve. In the method, the nitrogen content can be adjusted to a suitable arbitrary value from 4.5% to 7.5%. The following two application examples of the adjustment method are given. First, when the nitrogen content of the rapeseed meal is high and the environmental load is excessively high depending on the harvesting period and the variation of the rapeseeds, feed and fertilizers adjusted to have a low nitrogen content and having low environmental load are obtained through use of the fraction remaining on the mesh sieve, described above, obtained as a result of the adjustment method. Next, when the nitrogen content of the rapeseed meal is low and the nutritional value is excessively low, highly nutritional feed and fertilizers adjusted to have a high nitrogen content are obtained through use of the fraction sifted below the mesh sieve, described above, obtained as a result of the adjustment method.

Next, the present invention will be described in further detail using examples and comparative examples. The details of the examples do not limit the technical scope of the present invention.

Example 1

A 12 mesh (1.4mm openings; mesh may be referred to as M) sieve, a 20M (850μm openings) sieve, a 32M (500μm opening) sieve, a 35M (425μm opening) sieve, a 48M (300μm openings) sieve, and a 60M (250μm openings) sieve were stacked in sequence from the top. On the uppermost section, 500g of rapeseed meal (manufactured by J-Oil Mills, Inc.) were placed. The rapeseed meal was manually sifted for 10 minutes.

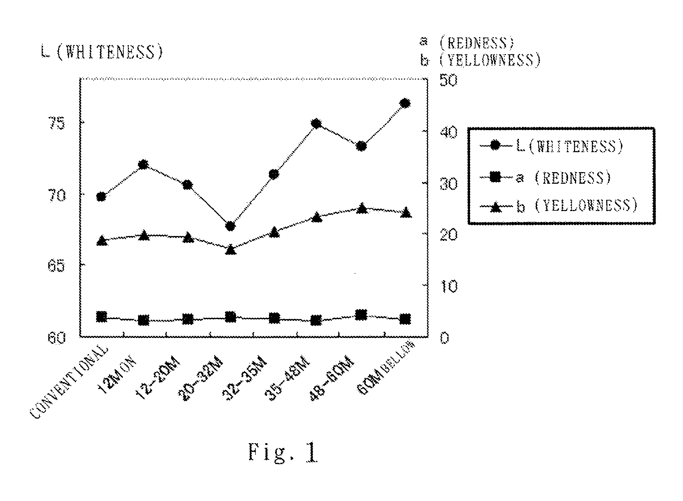

Upon study of the results of sifting, hulls, cotyledons, and hypocotyls granulated after having once been peeled form a large portion of the rapeseed meal remaining on the 12 mesh. Granulated substances decrease below the 12 mesh. At the 20 to 30 mesh, the hulls formed the majority. Conventional rapeseed meal (unsifted), coarse rapeseed meal, and fine rapeseed meal were ground by a grinder. Color evaluation was then performed using a color difference meter (product name: Color Reader CR-10 by Konica Minolta Sensing, Inc.). Fig. 1 shows measurement results of color tones of the rapeseed meals. In the fractions below the 35 mesh in particular, white and yellow are strong, forming a bright color tone.

Weight percentage, moisture content, nitrogen content (N-content), oil content, and protein content of the sifted fractions were measured. The moisture content was measured by a heated-air drying method based on feed analysis standards. The N-content was measured by the Kjeldahl method based on Standard Methods for the Analysis of Fats, Oil, and Related Materials. The oil content was measured by an ether extraction method based on Standard Methods for the Analysis of Fats, Oil, and Related Materials. The protein content was determined by the measured N-content being multiplied by a protein conversion factor 6.25. The results are shown in Table 1.

Table 1

| Type | | Weight (%) | Moisture content (%) | N content (%) | Oil content (%) | Protein content [CP] (%) |
|---|---|---|---|---|---|---|
| Conventional rapeseed meal (unsifted) | | 100.0 | 12.10 | 5.99 | 2.74 | 37.44 |
| Coarse rapeseed meal | On 12M | 8.2 | 11.90 | 6.13 | 1.84 | 38.31 |
| | On 20M | 20.0 | 11.93 | 5.78 | 2.56 | 36.13 |
| | On 32M | 33.0 | 12.05 | 5.34 | 3.32 | 33.38 |
| | On 35M | 10.4 | 11.88 | 5.90 | 2.85 | 36.88 |
| Fine rapeseed meal | On 48M | 12.0 | 11.61 | 6.76 | 2.34 | 42.25 |
| | On 60M | 9.0 | 11.24 | 7.13 | 2.42 | 44.56 |
| | Below 60M | 7.4 | 10.84 | 7.27 | 2.79 | 45.44 |

As shown in Table 1, significant differences in the nitrogen content and the protein content can be seen between the coarse rapeseed meal that was a combination of the rapeseed meal remaining on the 12 to 35 meshes and the fine rapeseed meal that was a combination of the rapeseed meal remaining on the 48 mesh to below the 60 mesh. Particularly, the fraction below the 48 mesh was a high-protein rapeseed meal of which the N-content exceeded 7%. Through this method, a rapeseed meal of which the N-content was arbitrarily adjusted between 5.34% and 7.27%, about 0.8 times to 1.2 times the N-content of the rapeseed meal serving as the raw material, can be obtained with minimal changes in the moisture content of the rapeseed meal.

An amino acid analysis was performed on the conventional rapeseed meal, the coarse rapeseed meal, and the fine rapeseed meal. The results are shown in Fig. 2. In an amino acid composition of the fine rapeseed meal, the percentages of arginine, methionine, tryptophan, and glutamic acid, useful for muscle development, further increased by about 2% to 4% from the simple increase in N-content. According to *Distribution of Napin and Cruciferin in Developing Rape Seed Embryos (*Hoglund et al., Plant Physiol. 1992, 98, 509 to 515*),* the main proteins in rapeseed are reserve proteins, such as cruciferin and napin. Deviations in the reserve proteins and other proteins are believed not to be present in the seeds, the hypocotyls, and the cotyledons. Therefore, the difference between the amino acid composition of the fine rapeseed meal obtained by the process of the invention and that of the conventional rapeseed meal was unexpected.

Analyses of tannin, glucosinolate, fiber, and water-soluble nitrogen index (NSI) in the conventional rapeseed meal, the coarse rapeseed meal, and the fine rapeseed meal in Table 1 were performed. Tannin is indicated by an amount of tannic acid based on the Folin-Denis method. Glucosinolate was measured by HPLC, AOCS official method. Fiber and NSI were measured by the Standard Methods for the Analysis of Fats, Oil, and Related Materials. The results are shown in Table 2.

Table 2

| Type | Tannin (%) | Glucosinolates ($\mu$mol/g) | Fiber (%) | NSI |
|---|---|---|---|---|
| Conventional rapeseed meal (unsifted) | 1.09 | 5.9 | 9.65 | 11.26 |
| Coarse rapeseed meal | 1.06 | 3.3 | 10.14 | 9.49 |
| Fine rapeseed meal | 1.31 | 4.1 | 6.19 | 12.36 |

The amount of tannin, which is a bitter substance, in the coarse rapeseed meal was slightly lower than that in the conventional rapeseed meal. Moreover, fiber was slightly higher, and NSI was a slightly lower value. On the other hand, contrasting values were obtained for the fine rapeseed meal. Glucosinolates decreased particularly in the coarse rapeseed meal. It was confirmed that an amount of glucosinolate problematic for use as feed material was not found in either the coarse rapeseed meal or the fine rapeseed meal.

Taste tests were conducted on the conventional rapeseed meal, the coarse rapeseed meal, and the fine rapeseed meal by four panelists. Four evaluation criteria were used, as shown in Table 3: aroma, bitterness, sweetness, and favorability. The higher the points for each criterion are, the more positive the evaluation is.

Table 3

| Evaluation criterion | 1 point | 2 points | 3 points |
|---|---|---|---|
| Aroma | No aroma | Unchanged | Aromatic |
| Bitterness | Bitter | Unchanged | Not Bitter |
| Sweetness | Not sweet | Unchanged | Sweet |
| Favorability | Not favorable | Unchanged | Favorable |

Mean values of the panelist evaluation results are shown in Table 4.

Table 4

| Type | Aroma | Bitterness | Sweetness | Favorability | Total |
|---|---|---|---|---|---|
| Conventional rapeseed meal (unsifted) | 2 | 2 | 2 | 2 | 8 |
| Coarse rapeseed meal | 2.25 | 2.5 | 2.25 | 2.75 | 9.75 |
| Fine rapeseed meal | 1.75 | 1 | 2.25 | 1.25 | 6.25 |

In the coarse rapeseed meal used in this test, inclusion of the fine rapeseed meal was 5% or less. In other words, in the rapeseed meal having a high palatability, the content of rapeseed meal sifted below the 32 to 60 mesh was 5% or less.

The palatability to livestock is high for items that are aromatic and sweet. On the other hand, the palatability is low for bitter items. Items that livestock finds tasty are considered to be similar to those found favorable by humans. From the test results, fractions with fine granularity are found to be bitterer than the conventional rapeseed meal, and the total points are low. On the other hand, the fractions with coarse granularity are found to be less bitter and are excellent overall.

The evaluation of the coarse rapeseed meal exceeds prediction made based on the amount of decrease in tannin shown in Table 2. Remaining bitter substances are believed to be masked as a result of the rapeseed meal being granulated during the oil extracting process. Such results cannot be obtained from rapeseed meal from which oil is extracted after husking.

Similar trends were seen when a 48 mesh sieve was used to demarcate the coarse rapeseed meal and the fine rapeseed meal. In other words, aside from changing the demarcation from the 35 mesh to the 48 mesh, a sifting operation similar to that performed in Table 1 was performed. The results of analyses of tannin, glucosinolates, fiber, and water-soluble nitrogen index (NSI) in the obtained coarse rapeseed meal and fine rapeseed meal are shown in Table 5. The panelist evaluation results are shown in Table 6.

Table 5

| Type | Tannin (%) | Glucosinolates ($\mu$mol/g) | Fiber (%) | NSI |
|---|---|---|---|---|
| Conventional rapeseed meal (unsifted) | 1.09 | 5.9 | 9.65 | 11.26 |
| Coarse rapeseed meal above 48M | 1.03 | 3.2 | 10.55 | 9.19 |
| Fine rapeseed meal below 48M | 1.38 | 4.3 | 5.08 | 13.17 |

Table 6

| Type | Aroma | Bitterness | Sweetness | Favorability | Total |
|---|---|---|---|---|---|
| Conventional rapeseed meal (unsifted) | 2 | 2 | 2 | 2 | 8 |
| Coarse rapeseed meal above 48M | 2.25 | 2.75 | 2.25 | 2.75 | 10 |
| Fine rapeseed meal below 48M | 2 | 1.25 | 2.25 | 1.5 | 7 |

Similar trends were seen when a 32 mesh sieve was used to demarcate the coarse rapeseed meal and the fine rapeseed meal. In other words, aside from changing the demarcation from the 35 mesh to the 32 mesh, a sifting operation similar to that performed in Table 1 was performed. The results of analyses of tannin, glucosinolates, fiber, and water-soluble nitrogen index (NSI) in the obtained coarse rapeseed meal and fine rapeseed meal are shown in Table 7.

Table 7

| Type | Tannin (%) | Glucosinolates ($\mu$mol/g) | Fiber (%) | NSI |
|---|---|---|---|---|
| Conventional rapeseed meal (unsifted) | 1.09 | 5.9 | 9.65 | 11.26 |
| Coarse rapeseed meal above 32M | 1.07 | 5.1 | 10.92 | 10.52 |
| Fine rapeseed meal below 32M | 1.18 | 6.0 | 7.21 | 12.04 |

Example 2

Rapeseed meal was produced by an operation similar to that in Example 1, using a rapeseed meal manufactured at a different location from the rapeseed meal in Example 1. The weight, moisture content, nitrogen content (N-content), oil content, and protein content of the sifted fractions were measured. The results are shown in Table 8.

Table 8

| Type | | Weight (%) | Moisture content (%) | N content (%) | Oil content (%) | Protein content [CP] (%) |
|---|---|---|---|---|---|---|
| Conventional rapeseed meal (unsifted) | | 100.0 | 12.22 | 5.83 | 3.38 | 36.4 |
| Coarse rapeseed meal | On 12M | 6.6 | 12.20 | 5.88 | 2.41 | 36.8 |
| | On 20M | 20.4 | 12.27 | 5.40 | 3.45 | 33.8 |
| | On 32M | 30.4 | 12.35 | 5.18 | 3.86 | 32.4 |
| | On 35M | 10.0 | 12.17 | 5.95 | 3.23 | 37.2 |
| Fine rapeseed meal | On 48M | 12.8 | 12.02 | 6.73 | 2.88 | 42.0 |
| | On 60M | 8.2 | 11.82 | 7.08 | 2.71 | 44.3 |
| | Below 60M | 11.6 | 11.67 | 7.16 | 2.73 | 44.1 |

In a similar manner to Example 1, significant differences in the nitrogen content and the protein content can be seen between the rapeseed meal remaining above the 35 mesh and the rapeseed meal sifted below the 35 mesh.

Example 3

Rapeseed meal was produced by an operation similar to that in Example 1, using a rapeseed meal manufactured at a different location from the rapeseed meal in Example 1 and the rapeseed meal in Example 2. The weight, moisture content, nitrogen content (N-content), oil content, and protein content of the sifted fractions were measured. The results are shown in Table 9.

Table 9

| Type | | Weight (%) | Moisture content (%) | N content (%) | Oil content (%) | Protein content [CP] (%) |
|---|---|---|---|---|---|---|
| Conventional rapeseed meal (unsifted) | | 100.0 | 12.58 | 5.41 | 2.74 | 33.8 |
| Coarse rapeseed meal | On 12M | 2.2 | 12.30 | 5.18 | 2.15 | 32.4 |
| | On 20M | 9.4 | 12.55 | 4.91 | 2.91 | 30.7 |
| | On 32M | 32.8 | 12.68 | 4.66 | 3.42 | 29.1 |
| | On 35M | 15.6 | 12.53 | 5.37 | 2.62 | 33.6 |
| Fine rapeseed meal | On 48M | 18.2 | 12.29 | 6.03 | 2.12 | 37.7 |
| | On 60M | 10.2 | 12.05 | 6.53 | 1.85 | 40.8 |
| | Below 60M | 11.6 | 11.48 | 6.73 | 2.11 | 42.0 |

In a similar manner to Example 1, significant differences in the nitrogen content and the protein content can be seen between the rapeseed meal remaining above the 35 mesh and the rapeseed meal sifted below the 35 mesh.

Example 4

Rapeseed meals were respectively produced by an operation similar to that in Example 1 from 23 samples of rapeseed meals serving as the raw material from rapeseeds grown in various areas and manufactured in various manufacturing plants. The nitrogen content (N-content) of the sifted fractions was measured. Calculation was performed regarding the percentage of increase and decrease in the N-content of the rapeseed meals as a result of sifting. The change in the N-content as a result of the demarcation point between the coarse rapeseed meal and the fine rapeseed meal was checked (Table 10).

Table 10

| | | Mean N-content (% ±SD) | Increase and decrease in N-content in relation to conventional rapeseed meal (-times ±SD) |
|---|---|---|---|
| Conventional rapeseed meal (unsifted) | | 5.924±0.151 | 1 |
| Separated at 32M | Upper fraction | 5.627±0.177 | 0.95±0.009 |
| | Lower fraction | 6.665±0.170 | 1.125±0.010 |
| Separated at 35M | Upper fraction | 5.699±0.183 | 0.962±0.008 |
| | Lower fraction | 6.911±0.166 | 1.167±0.006 |
| Separated at 48M | Upper fraction | 5.842±0.172 | 0.986±0.006 |
| | Lower fraction | 7.104±0.156 | 1.199±0.008 |
| Separated at 60M | Upper fraction | 5.909±0.158 | 0.997±0.005 |
| | Lower fraction | 7.129±0.142 | 1.204±0.011 |

The nitrogen contents of the 23 sample rapeseed meals serving as the raw material used in the test varied depending on the growing area and the manufacturing plant. The minimum nitrogen content was 5.63%, and the maximum nitrogen content was 6.15%. In each sifted fraction, the N-content changed with certainty, regardless of the rapeseed meal. The N-content was accurately adjusted by a certain percentage, regardless of the raw material. As a result of the present method, the rapeseed meal was arbitrarily adjusted to have a nitrogen content of 5.627±0.177 to 7.129±0.142, about 0.95 to 1.20 times that of the rapeseed meal serving as the raw material.

Comparative Example 1

Soybean meal was produced by an operation similar to that in Example 1, aside from the rapeseed meal in Example 1 being replaced with defatted soybeans (manufactured by J-Oil Mills, Inc.). The weight, moisture content, nitrogen content (N-content), oil content, and protein content of the sifted fractions were measured. The results are shown in Table 11.

Table 11

| Analysis criterion | Weight (%) | Moisture content (%) | Oil content (%) | N-content (%) | Protein content (%) |
|---|---|---|---|---|---|
| Conventional soymeal | 100 | 9.21 | 1.04 | 7.31 | 45.7 |
| On 12M | 34.5 | 9.10 | 0.81 | 7.31 | 45.7 |
| On 20M | 34.8 | 9.08 | 1.01 | 7.30 | 45.6 |
| On 32M | 19.5 | 9.10 | 1.13 | 7.43 | 46.4 |
| On 35M | 3.7 | 9.03 | 1.30 | 7.41 | 46.3 |
| On 48M | 3.2 | 9.00 | 1.35 | 7.40 | 46.3 |
| On 60M | 1.3 | 8.97 | 1.39 | 7.05 | 44.1 |
| Below 60M | 3.0 | 8.78 | 1.32 | 7.43 | 46.4 |

As shown in Table 11, deviations in the nitrogen content and the protein content depending on differences in fractions were not seen, even when the defatted soybeans were sifted.

Comparative Example 2

Soybean meal was produced by an operation similar to that in Example 1, aside from the rapeseed meal in Example 1 being replaced with hi-pro defatted soybeans (manufactured by J-Oil Mills, Inc.). The weight, moisture content, nitrogen content (N-content), oil content, and protein content of the sifted fractions were measured. The results are shown in Table 12.

Table 12

| Analysis criterion | Weight (%) | Moisture content (%) | Oil content (%) | N-content (%) | Protein content (%) |
|---|---|---|---|---|---|
| Conventional soybeans | 100 | 10.26 | 0.89 | 7.95 | 49.7 |
| On 12M | 39.2 | 10.23 | 0.84 | 7.83 | 48.9 |
| On 20M | 33.7 | 10.25 | 1.01 | 7.92 | 49.5 |
| On 32M | 17.0 | 10.29 | 1.05 | 7.93 | 49.6 |
| On 35M | 3.3 | 10.29 | 1.14 | 7.80 | 48.7 |
| On 48M | 3.3 | 10.25 | 1.18 | 7.75 | 48.4 |
| On 60M | 1.2 | 10.23 | 1.24 | 7.63 | 47.7 |
| Below 60M | 2.3 | 10.23 | 1.25 | 7.79 | 48.7 |

As shown in Table 12, deviations in the nitrogen content and the protein content depending on differences in fractions were not seen, even when the hi-pro defatted soybeans were sifted.

Application Example 1

Three types of test materials, the same conventional rapeseed meal used in Example 1, coarse rapeseed meal collected on a sieve when the conventional rapeseed meal is separated by a 48 mesh sieve in adherence to the present invention, and fine rapeseed meal collected below the sieve, were administered to chickens. A test evaluating the nutritional values was conducted.

In the evaluation test, 40 male chicken broilers (chunky) of about 4 weeks old were used. A total of four experimental groups were set: a basic feed experimental group in which the chickens were fed basic feed shown in Table 13, and three test feed experimental groups in which the chickens were respectively fed test feeds that are combinations of the basic feed and three test materials, respectively combined at a ratio of 8:2. In the basic feed and each of the test feeds, 0.1% of chrome oxide was mixed as an indicator.

Table 13

| Raw material composition | Composition percentage (%) |
|---|---|
| Corn | 41.62 |
| Milo | 20.00 |
| Defatted rice bran | 15.00 |
| Corn gluten meal | 10.00 |
| Fishmeal (CP 65%) | 8.00 |
| Soybean oil | 2.00 |
| Calcium carbonate | 1.10 |
| Dicalcium phosphate | 0.50 |
| Salt | 0.30 |
| Vitamin B group[1] | 0.20 |

(continued)

| Raw material composition | Composition percentage (%) |
|---|---|
| Vitamin ADE[2] | 0.20 |
| Minerals[3] | 0.20 |
| DL-methionine | 0.20 |
| L-lysine hydrochloride | 0.38 |
| L-threonine | 0.05 |
| L-tryptophan | 0.05 |
| L-arginine | 0.20 |
| Total | 100 |

1: One kilogram of vitamin B group includes 2.0g of thiamin nitrate, 10.0g of riboflavin, 2.0g of pyridoxine hydrochloride, 2.0g of nicotinic-acid amide, 4.35g of D-calcium pantothenate, 138.0g of choline chloride, and 1.0g of folic acid.
2: One gram of vitamin ADE includes 10,000IU of vitamin A oil, 2,000IU of Vitamin D3 oil, and 20mg of DL-$\alpha$-tocopherol acetate.
3: one kilogram of minerals include 80g of Mn, 50g of Zn, 6g of Fe, 1g of I, and 0.6g of Cu.

The chickens were housed in metabolism cages, two chickens forming a single group. All chickens were fed the basic feed for four days, and acclimated to the test environment. Then, the basic feed and the test feeds were assigned to five groups each. The chickens were continuously fed respective feeds for ten days.

Feces and urine mixtures excreted for five days starting from the sixth day of each feed being fed were collected twice a day, morning and evening, for each group. At each time, after being weighed, all collected feces and urine mixtures were dried by air circulation for two days, at a temperature of about 60°C. After being dried, the feces and urine mixtures for the five days were ground into fine powder, to serve as analysis samples.

The nitrogen (N) in the test materials was analyzed by the Kjeldahl method. Gross energy (GE) was analyzed by a bomb calorie meter. In addition to N and GE of the basic feed, the test feeds, and the collected feces and urine mixtures being analyzed, chrome oxide was also analyzed using a colorimeter method (Livestock Experimental Station Research Report 52, 1992).

Regarding digestivity and nutritional value, nitrogen correction metabolic energy (ME) for the basic feed and the test feeds were calculated using an index method in which chrome oxide serves as the indicator. Then, the ME and the metabolic rate of the test materials were calculated by a following equation.

## Equation 1

$$ME\ of\ test\ material(Mcal/kg) = \frac{ME\ of\ test\ feed - ME\ of\ basic\ feed \times mixing\ ratio\ of\ basic\ feed\ (80\%)}{mixing\ ratio\ of\ test\ material\ (20\%)}$$

$$metabolic\ rate\ of\ test\ material\ (\%) = \frac{ME\ of\ test\ material\ (Mcal/kg)}{GE\ of\ test\ material\ (Mcal/kg)}$$

The measurement results of the GE, the ME, and the metabolic rate of the test materials are shown in Table 14.

Table 14

| | Gross energy (Mcal/kg) | Metabolic energy (Mcal/kg) | Metabolic rate (%) |
|---|---|---|---|
| Conventional rapeseed meal | 4.30 | $1.68 \pm 0.12$ | $39.1 \pm 2.8$ |
| Coarse rapeseed meal | 4.31 | $1.84 \pm 0.12$ | $42.7 \pm 2.7$ |
| Fine rapeseed meal | 4.34 | $2.04 \pm 0.10$ | $47.0 \pm 2.3$ |

The ME and the metabolic rate of the sampled conventional rapeseed meal almost matches the ME (1.69Mcal/kg) and the metabolic rate (40.2%) of the rapeseed meal (canola-based) stated in Japanese Feeding Standard (Japanese Standard Feed Ingredient List, published in 2001).

The coarse rapeseed meal and the fine rapeseed meal both have higher ME and metabolic rates than the rapeseed meal (canola-based) stated in Japanese Feeding Standard (Japanese Standard Feed Ingredient List, published in 2001). In particular, the fine rapeseed meal was significantly superior even compared to the conventional rapeseed meal.

The metabolic rate increases because of an increase in digestibility. The fine rapeseed meal is considered to have large amounts of components with high digestibility. The metabolic rate in the coarse fraction is considered to have also increased because of the decrease in tannin, which absorbs nutrients and obstructs digestion and absorption. As a result, digestibility improved.

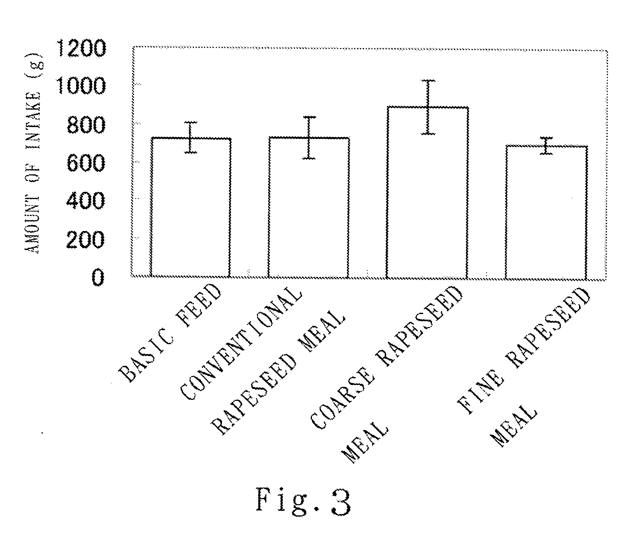

The amount of intake was calculated from the amount of excrement during the testing period and the amount of chrome oxide. The results are shown in Fig. 3. Fig. 3 indicates that the amount of intake in the coarse rapeseed meal experimental group is significantly higher than the other experimental groups. No difference was found in the fine rapeseed meal experimental group when compared with the basic feed experimental group and the conventional rapeseed meal experimental group. Free feeding was used in this test. Therefore, the amount of intake is assumed to have increased because the bitterness components having fine granularity decreased in the coarse rapeseed meal, and palatability improved.

## Claims

1. A method for producing rapeseed meal, consisting of sifting a rapeseed meal raw material which is a residue remaining after oil extraction process comprising
   extracting oil from rapeseeds by a press thereby producing a pomace,
   and
   extracting oil remaining in the pomace by an organic solvent
   through a 32 mesh ($500\mu$m openings) to 48 mesh ($300\mu$m openings) sieve to separate into a first rapeseed meal which has a grain size in which grains remain on the mesh sieve and is adjusted in a nitrogen content 0.95 to 0.986 times that of said rapeseed meal raw material, and a second rapeseed meal which has a grain size in which grains pass through the mesh sieve and is adjusted in a nitrogen content 1.199 to 1.125 times that of the rapeseed meal raw material.

2. A method for adjusting nitrogen content in a rapeseed meal consisting of sifting a rapeseed meal raw material which is a residue remaining after oil extraction process comprising
   extracting oil from rapeseeds by a press thereby producing a pomace,
   and
   extracting oil remaining in the pomace by an organic solvent
   through a 32 to 48 mesh sieve to separate into a first rapeseed meal which has a grain size in which grains remain on the mesh sieve and is adjusted in nitrogen content 0.95 to 0.986 times that of said rapeseed meal raw material and a second rapeseed meal which has a grain size in which grains pass through the mesh sieve and is adjusted in nitrogen content 1.199 to 1.125 times that of the rapeseed meal raw material.

## Patentansprüche

1. Verfahren für die Herstellung von Rapsschrot, das im Sieben von Rapsschrotrohmaterial besteht, das ein Abfallprodukt ist, das nach Ölgewinnung übrigbleibt, mit:

Gewinnung von Öl aus Raps durch eine Presse, wobei eine gepresste Fruchtmasse produziert wird, und

Gewinnung von Öl, das in der gepressten Fruchtmasse übrigbleibt, durch ein organisches Lösungsmittel durch ein 32-maschiges (500μm Öffnungen) bis 48-maschiges (300μm Öffnungen) Sieb, um in ein erstes Rapsschrot, das eine Körnung aufweist, in der die Körner auf dem maschigen Sieb verbleiben und das auf einen Stickstoffgehalt von 0,95 bis 0,986mal dem des Rapsschrotrohmaterials abgestimmt ist, und ein zweites Rapsschrot, das eine Körnung aufweist, in der die Körner durch das maschige Sieb fallen und das auf einen Stickstoffgehalt von 1,199 bis 1,125mal dem des Rapsschrotrohmaterials abgestimmt ist, zu trennen.

**2.** Verfahren zur Abstimmung des Stickstoffgehalts in einem Rapsschrot, das im Sieben von Rapsschrotrohmaterial besteht, das ein Abfallprodukt ist, das nach Ölgewinnung übrigbleibt, mit:

Gewinnung von Öl aus Raps durch eine Presse, wobei eine gepresste Fruchtmasse produziert wird, und

Gewinnung von Öl, das in der gepressten Fruchtmasse übrigbleibt, durch ein organisches Lösungsmittel durch ein 32- bis 48-maschiges Sieb, um in ein erstes Rapsschrot, das eine Körnung aufweist, in der die Körner auf dem maschigen Sieb verbleiben und das auf einen Stickstoffgehalt 0,95 bis 0,986mal dem des Rapsschrotrohmaterials abgestimmt ist und ein zweites Rapsschrot, das eine Körnung aufweist, in der die Körner durch das maschige Sieb fallen und das bis auf einen Stickstoffgehalt 1,199 bis 1,125mal dem des Rapsschrotrohmaterials abgestimmt ist, zu trennen.

## Revendications

**1.** Procédé de production d'un tourteau de colza, consistant à tamiser une matière première de tourteau de colza correspondant à un résidu restant après un processus d'extraction d'huile, comprenant :

l'extraction de l'huile des colzas par le biais d'une presse, produisant ainsi un marc ; et

l'extraction de l'huile restant dans le marc par le biais d'un solvant organique :

à travers un tamis de maillage 32 (ouvertures de 500 μm) à maillage 48 (ouvertures de 300 μm) pour réaliser la séparation entre un premier tourteau de colza ayant une taille de grain pour laquelle les grains restent sur le tamis à mailles et présentent une teneur en nitrogène ajustée de 0,95 à 0,986 fois celle de ladite matière première de tourteau de colza et un second tourteau de colza ayant une taille de grain pour laquelle les grains passent à travers le tamis à mailles et présentent une teneur en nitrogène ajustée de 1,199 à 1,125 fois celle de la matière première de tourteau de colza.

**2.** Procédé d'ajustement de la teneur en nitrogène dans un tourteau de colza consistant à tamiser une matière première de tourteau de colza correspondant au résidu restant après un processus d'extraction d'huile comprenant :

l'extraction de l'huile des colzas par le biais d'une presse, produisant ainsi un marc ; et

l'extraction de l'huile restant dans le marc par le biais d'un solvant organique : à travers un tamis de maillage 32 à 48 pour réaliser la séparation entre un premier tourteau de colza ayant une taille de grain pour laquelle les grains restent sur le tamis à mailles et présentent une teneur en nitrogène ajustée de 0,95 à 0,986 fois celle de ladite matière première de tourteau de colza et un second tourteau de colza ayant une taille de grain pour laquelle les grains passent à travers le tamis à mailles et présentent une teneur en nitrogène ajustée de 1,199 à 1,125 fois celle de la matière première de tourteau de colza.

Fig. 1

Fig.2

EP 2 123 178 B1

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000316472 A
- WO 2000027222 A

### Non-patent literature cited in the description

- **W. GRALA et al.** *Journal of Animal Science,* 1998, vol. 76, 557-568
- **W. GRALA et al.** *Journal of Animal Science,* 1998, vol. 76, 569-577
- **SHAABAN ALI ; KUBUNI MWACHIREYA.** Effect of processing and microbial enzyme treatment on the nutritive value of canola meal for rainbow trout. *Thesis,* 31 December 1995, 1-143
- **ELAHEH KESHAVARZ.** Preparation, delorization and functional properties of the protein isolates extracted from rapeseed meal. *Preparation, delorization and functional properties of the protein isolates extracted from rapeseed meal,* 31 May 1974, 1-30
- **A. F. MUSTAFA ; D. A. CHRISTENSEN ; J. J. MCKINNON.** The effects of feeding high fiber canola meal on total tract digestibility and milk production. *Internet,* 19 November 1996, 133-140
- **KAMINSKA B Z et al.** High-protein fraction of 00 type rapessed meal in broiler nutrition. *JOURNAL OF ANIMAL AND FEED SCIENCES, POLSKA AKADEMIA NAUK,* 01 January 2000, vol. 9, 123-136
- **GRALA.** *Journal of Animal Science,* 1998, vol. 76, 557-568, 569-577
- **HOGLUND et al.** *Plant Physiol.,* 1992, vol. 98, 509-515
- Japanese Standard Feed Ingredient List. 2001